# EUROPÄISCHE PATENTANMELDUNG

(11) **EP 1 486 107 A1**
(43) Veröffentlichungstag der Anmeldung: **15.12.2004**
(21) Anmeldenummer: 04013293.8
(22) Anmeldetag: 05.06.2004
(51) Int. Cl.: A01C 5/06

(54) **Hinter einem Säschar mittels einer federnd beaufschlagten Halterung angeordneten Saatandruckrolle**

(30) Priorität: 12.06.2003 DE 10326997
(71) Anmelder: Amazonen-Werke H. Dreyer GmbH & Co. KG, 49205 Hasbergen (DE)
(72) Erfinder: Brook, Gebhard, 49429 Visbeck (DE); Feldhaus, Werner, 27801 Dötlingen (DE); Steen, Rüdiger, 27798 Hude (DE); Tiessen, Reimer Uwe, 26135 Oldenburg (DE)

(57) **Zusammenfassung**

Hinter einem Säschar mittels einer federnd beaufschlagten Halterung angeordnete Saatandruckrolle. Um eine preiswertere und einfachere ausgebildete Anordnung einer Saatandruckrolle am Säschar zu erreichen ist vorgesehen, dass die federnd beaufschlagte Halterung als elastischer Arm mit zumindest einer Federwindung ausgebildet ist.

## Beschreibung

Die Erfindung betrifft eine federnd angeordnete Saatandruckrolle gemäß des Oberbegriffes des Patentanspruches 1.

Eine derartige Saatandruckrolle ist beispielsweise durch die DE-OS 32 23 558 bekannt. Diese Druckschrift beschreibt eine Sämaschine mit Säscharen, die Furchen in den Boden ziehen. In diesen Furchen wird Saatgut abgelegt, welches mittels Saatandruckrollen gegen den Boden angedrückt wird. Hierbei kann auch zunächst das Saatgut mit Boden bedeckt und anschließend der Boden oberhalb des Saatgutes mit der Saatandruckrolle angedrückt werden. Diese Saatandruckrolle ist über eine Halterung mittels eines Gelenkes schwenkbar an einem Querbalken angeordnet. Die Saatandruckrolle wird mittels einer Feder gegen den Boden gedrückt. Diese Aufhängung der Saatandruckrolle mittels eines Gelenkes an einem Querbalken und der federnd beaufschlagten Halterung ist relativ aufwendig.

Der Erfindung liegt die Aufgabe zugrunde, eine preiswertere und einfacher ausgebildete Anordnung einer Saatandruckrolle an einem Säschar zu erreichen.

Diese Aufgabe wird erfindungsgemäß dadurch gelöst, dass die federnd beaufschlagte Halterung als elastischer Arm mit zumindest einer Federwindung ausgebildet ist. Infolge dieser Maßnahmen wird eine sehr einfache Halterung geschaffen, die gleichzeitig aufgrund ihrer elastischen Ausbildung die in den Arm integrierte Feder aufweist, die die Saatandruckrolle federnd gegen den Boden drückt. Aufgrund des elastischen Armes mit der Federwindung wird keine Gelenkausbildung und keine zusätzliche separate Feder zur federnden Beaufschlagung der Saatandruckrolle benötigt. Die Halterung ist auch bei Kurvenfahrten elastisch und führt die Rolle stets dem Schar in der Furche hinterher.

Eine einfache Ausgestaltung des elastischen Armes lässt sich dadurch erreichen, dass die Halterung einen runden Querschnitt aufweist und aus Federstahl hergestellt ist.

Um unter den Einsatzfällen, wenn der Einsatz einer Saatandruckrolle nicht gewünscht ist, diese in einfacher Weise außer Betrieb setzen zu können, ist vorgesehen, dass die Halterung mittels einer lösbaren Verbindung am Säschar angeordnet ist.

Um das in der Säfurche abgelegte Saatgut bzw. die sich oberhalb des in der Säfurche abgelegten Saatgutes befindlichen Bodenteile andrücken zu können, ist vorgesehen, dass die Rolle in Fahrtrichtung gesehen fluchtend zu dem die Säfurche formenden Teil des Säschares angeordnet ist.

Um in einfacher Weise je nach Einsatzanforderung die Saatandruckrolle zum Einsatz, oder nicht zum Einsatz zu bringen, ist in einer Ausführungsform vorgesehen, dass die federnd beaufschlagte Halterung als elastischer Arm ausgebildet ist, dass der Arm mittels einer Einstellvorrichtung in aufrechter Ebene zur Einstellung der Rolle in eine untere Andrückposition und eine obere Außerbetriebsposition verstellbar ist. Infolge dieser Maßnahmen kann durch die Einstellvorrichtung sehr schnell und ohne Demontage der Halterung oder der Saatandruckrolle vom Säschar diese quasi werkzeuglos in die gewünschte Position eingestellt werden.

Um eine einfache Ausgestaltung der Verstellung zu erreichen, ist vorgesehen, dass aufgrund der Ausbildung des elastischen Armes dieser das Bestreben hat, die Rolle in die obere Außerbetriebsposition zu heben. Infolge dieser Maßnahmen kann die Einstellvorrichtung sehr einfach ausgebildet werden, da die Halterung aufgrund ihrer Federeigenschaft das Bestreben hat zu halten, wenn sie nicht durch die Einstellvorrichtung in Position "andrücken" gehalten wird.

Eine einfache Ausgestaltung der Einstellvorrichtung lässt sich dadurch erreichen, dass die Einstellvorrichtung als am Säschar angeordnete und verschwenkbare Exzentereinrichtung ausgebildet ist. Hierdurch kann quasi werkzeuglos die Umstellung vorgenommen werden. Um eine sichere Einstellung der Exzentervorrichtung in die jeweils vorgesehene Position zum sicheren Halt des Armes zu erreichen, ist vorgesehen, dass die Exzentereinrichtung als Exzenter ausgebildet ist und zwei plane mit dem Arm in der unteren Andrückposition oder der oberen Außerbetriebsstellung zusammenwirkende Anlageflächen aufweist. Die Exzentereinrichtung ist selbsthemmend ausgebildet insbesondere für die Position "andrücken" selbsthemmend ausgebildet.

Eine einfache Ausgestaltung des elastischen Armes und eine gleichzeitig einfache Anordnung der Saatandruckrolle an diesem Arm lässt sich dadurch erreichen, dass der elastische Arm zwei parallele und im Abstand zueinander verlaufende Streben aufweist, dass an den hinteren Enden der Streben die Achse der Rolle befestigt ist.

Weitere Einzelheiten der Erfindung sind der Beispielsbeschreibung und den Zeichnungen zu entnehmen. Hierbei zeigen
- Fig. 1: die an Säscharen angeordnete Saatandruckrollen in perspektivischer Darstellung, wobei die Saatandruckrolle sich in der oberen Außerbetriebsstellung befindet, wobei nur einige Säschare einer Sämaschine dargestellt sind,
- Fig. 2: die Saatandruckrollen mit Säscharen gemäß Fig. 1 in Seitenansicht,
- Fig. 3: die Saatandruckrollen mit Säscharen in gleicher Darstellungsweise wie Fig. 1, wobei sich jedoch die Saatandruckrolle in der unteren Andrückposition befindet und
- Fig. 4: die Saatandruckrolle mit Säscharen nach Fig. 3 in Seitenansicht

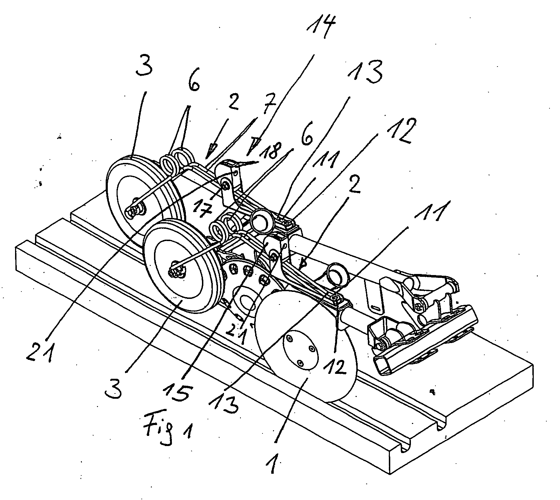

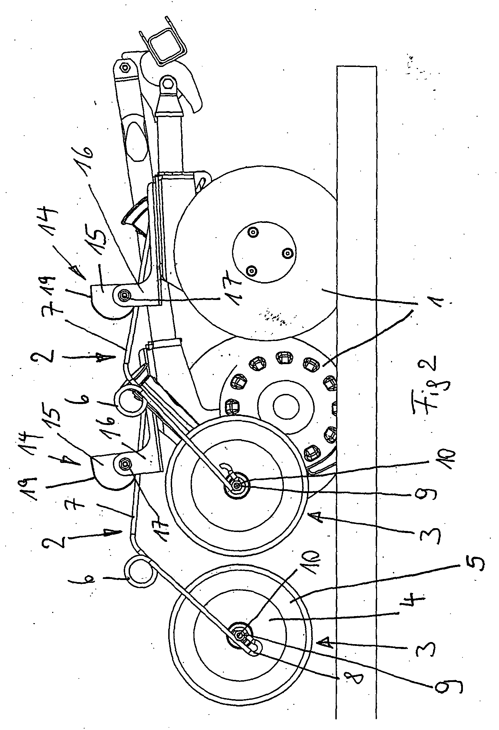

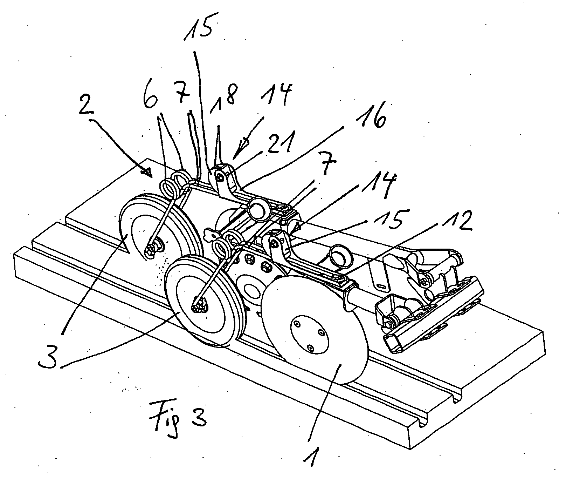

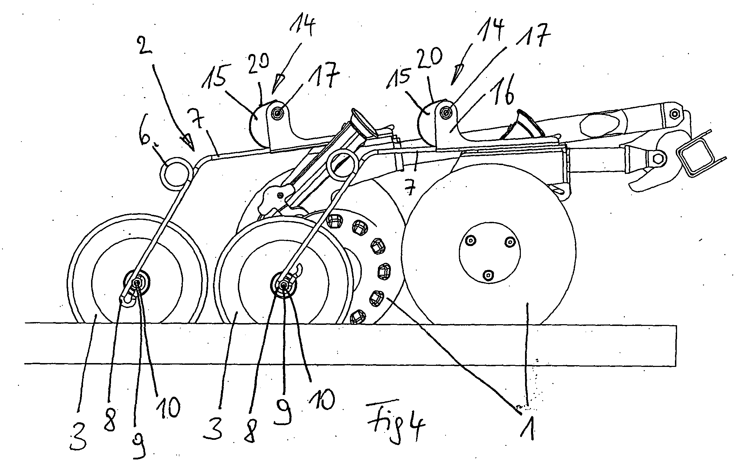

An dem Scharbalken einer Sämaschine sind mittels Gelenkanordnungen Säschare 1 in aufrechter Ebene schwenkbar angeordnet. An dem Säschar 1 einer Sämaschine ist über die federnd beaufschlagte Halterung 2 die frei drehbar angeordnete Saatandruckrolle 3 angeordnet. Im bevorzugter Weise weist die Saatandruckrolle 3 einen auf einer Felge 4 angeordnete Gummireifen 5 auf. Die Halterung 2 ist als elastischer Arm mit zumindest einer Federwindung 6 ausgebildet. Im Ausführungsbeispiel weist die Halterung 2 zwei beabstandet zueinander angeordnete Streben 7 mit jeweils zwei Federwindungen 6 auf. Die Streben 7 sind aus Federstahl hergestellt und weisen einen runden Querschnitt auf. An den Enden 8 der Streben 7 ist mittels einer Schraubverbindung 9 die Achse 10 der Saatandruckrolle 3 befestigt. Das vordere Ende 11 der Streben 7 sind über zwei Schrauben 12 an dem Säschar 1 lösbar angeordnet. Die Streben 7 weisen im vorderen Bereich einen Knick 13 auf, so dass sie das Bestreben haben, die Rolle 3 in der in Fig. 1 und 2. dargestellte oberen Außerbetriebsposition zu halten. Dem Säschar 1 und dem elastischen Arm 4 ist die als Exzentereinrichtung 14 ausgebildete Einstelleinrichtung zugeordnet. Der Exzenterklotz 15 der Exzentereinrichtung 14 ist an einem Adapter 16 mittels einer Achse 17 drehbar gelagert. In dem Exzenterklotz 15 befindet sich die Nuten 18, in welchen die Streben 7 des elastischen Armes 4 liegen. Des weiteren weist der Exzenterklotz 15 zwei plane und mit den Streben 7 des Armes 4 in der Andrückposition und der oberen Außerbetriebsstellung zusammenwirkende Anlageflächen 19 und 20 auf. Durch Verdrehen des Exzenterklotzes 15 aus der in den Fig. 1 und 2 dargestellten Position in die in Fig. 3 und 4 dargestellte Position lässt sich die Andrückrolle 3 in die untere Andrückposition verstellen. Andererseits wenn ein Andrücken des Bodens mit der Saatandruckrolle 3 nicht gewünscht ist, kann der Exzenterklotz 15 aus der in Fig. 3 und 4 in die in den Fig. 1 und 2 dargestellte Position verstellt werden, so dass die Saatandruckrolle 3 aufgrund der elastischen Ausbildung und des Bestrebens des elastischen Armes 4 die Rolle 3 in die obere Außerbetriebsstellung gehoben und somit in einfacher Weise vom Boden abgehoben wird. Um ein möglichst leichtes Verschwenken des Exzenterklotzes 15 zu erreichen, ist in dem Exzenterklotz 15 die Bohrung 21 angebracht. In diese Bohrung 21 lässt sich ein Stab stecken, so dass über den von diesem als Hebelarm wirkenden Stab der Exzenterklotz 15 leicht verstellt werden kann.

## Patentansprüche

1. Hinter einem Säschar (1) mittels einer federnd beaufschlagten Halterung (4) angeordnete Saatandruckrolle (3) , **dadurch gekennzeichnet, dass** die federnd beaufschlagte Halterung (4) als elastischer Arm mit zumindest einer Federwindung (6) ausgebildet ist.

2. Saatandruckrolle nach Anspruch 1, **dadurch gekennzeichnet, dass** die Halterung (4) einen runden Querschnitt aufweist und aus Federstahl hergestellt ist.

3. Saatandruckrolle nach Anspruch 1, **dadurch gekennzeichnet, dass** die Halterung (4) mittels einer lösbaren Verbindung am Säschar (1) angeordnet ist.

4. Saatandruckrolle nach Anspruch 1, **dadurch gekennzeichnet, dass** die Rolle (3) in Fahrtrichtung gesehen fluchtend zu dem die Säfurche formenden Teil des Schares (1) angeordnet ist.

5. Hinter einem Säschar mittels einer federnd beaufschlagten Halterung angeordnete Saatandruckrolle, **dadurch gekennzeichnet, dass** die federnd beaufschlagte Halterung (4) als elastischer Arm (4) ausgebildet ist, dass der Arm mittels einer Einstellvorrichtung (14) in aufrechter Ebene zur Einstellung der Rolle (3) in eine untere Andrückposition und eine obere außer Betriebsposition verstellbar ist.

6. Saatandruckrolle nach Anspruch 1, **dadurch gekennzeichnet, dass** die federnd beaufschlagte Halterung als elastischer Arm (4) ausgebildet ist, dass der Arm (4) mittels einer Einstellvorrichtung (14) in aufrechter Ebene zur Einstellung der Rolle (3) in eine untere Andrückposition und eine obere Außerbetriebsposition verstellbar ist.

7. Saatandruckrolle nach Anspruch 5 oder 6, **dadurch gekennzeichnet, dass** aufgrund der Ausbildung des elastischen Armes (4) dieser das Bestreben hat, die Rolle (4) in die obere Außerbetriebsposition zu heben.

8. Saatandruckrolle nach einem oder mehreren der vorstehenden Ansprüche, **dadurch gekennzeichnet, dass** die Einstellvorrichtung (14) als am Säschar (1) angeordnet und verschwenkbare Exzentereinrichtung (15) ausgebildet ist.

9. Saatandruckrolle nach Anspruch 8, **dadurch gekennzeichnet, dass** die Exzentereinrichtung als Exzenter (15) ausgebildet ist und zwei plane mit dem Arm (4) in der Andrückposition oder der oberen Außerbetriebsstellung zusammenwirkende Anlageflächen (19,20) aufweist.

10. Saatandruckrolle nach einem oder mehreren der vorstehenden Ansprüche, **dadurch gekennzeichnet, dass** der elastische Arm (4) zwei parallele und im Abstand zueinander verlaufende Streben (7) aufweist, dass an den hinteren Enden (8) der Streben (7) die Achse (10) der Rolle (3) befestigt ist.
